# EUROPÄISCHE PATENTSCHRIFT

(11) **EP 1 897 600 B1**
(45) Veröffentlichungstag und Bekanntmachung des Hinweises auf die Patenterteilung: **11.11.2009**
(21) Anmeldenummer: 06018828.1
(22) Anmeldetag: 08.09.2006
(51) Int. Cl.: A63C 11/02, B60B 33/00, B62B 1/26, E06C 1/397

(54) **Vorrichtung zum Transport von Skiern**
Apparatus for the transport of skis
Appareil pour le transport de skis

(43) Veröffentlichungstag der Anmeldung: 12.03.2008
(73) Patentinhaber: Hauck, Wolfgang, 95445 Bayreuth (DE)
(72) Erfinder: Hauck, Wolfgang, 95445 Bayreuth (DE)
(74) Vertreter: Küchler, Stefan

(56) Entgegenhaltungen:
- WO-A-80/01761
- WO-A-2004/016878
- DE-A1- 3 439 278
- FR-A- 2 854 815
- FR-A1- 2 746 025
- FR-A1- 2 829 944
- US-A1- 5 170 552

## Beschreibung

Die Erfindung richtet sich auf eine Vorrichtung zum Transport von Skiern.

Wohl jeder Skifahrer kennt dieses Problem: Nicht überall kann man mit dem Fahrzeug direkt an der Talstation eines Skilifts parken, sondern muß - gerade während der Hochsaison - oftmals mehrere hundert Meter vom Parkplatz bis zu einer Liftstation laufen. Dabei ist die Bewegungsfreiheit durch die klobigen und relativ unbeweglichen Skistiefel stark eingeschränkt. Obendrein hat man die Skier und Stöcke sowie ggf. weitere Ausrüstungsgegenstände - Skibrille, Mütze, Handschuhe, Nierenbeutel bzw. Rucksack, etc. - mitzuführen. Die Skier werden wegen ihres Gewichts meist auf der Schulter transportiert, was nicht nur beschwerlich oder gar schmerzhaft ist, sondern obendrein auch - bspw. beim Entlanglaufen an Fahrbahnen - eine Gefahr für die eigene und/oder andere Personen mit sich bringen kann, weil nicht nur die Bewegungsfreiheit eingeschränkt ist, sondern auch das Sichtfeld.

DE-A-34 39 278 offenbart eine Vorrichtung zum Transport von Skiern mit einem Rad am Rücken der Klemmer.

Aus diesen Nachteilen resultiert das die Erfindung initiierende Problem, eine Vorrichtung zu schaffen, womit der Transport von Skiern erleichtert werden kann. Dabei ist aber besonders zu berücksichtigen, dass eine solche Vorrichtung auf der Skipiste mitgeführt werden muß und deshalb möglichst klein sein sollte, damit sie bspw. in eine Anorak- oder gar Hosentasche paßt.

Die Lösung dieses Problems gelingt bei einer Vorrichtung zum Transport von Skiern durch eine Klammer zum Aufstecken auf das Ende eines oder zweier Skier, bestehend aus zwei länglichen Klammerschenkeln und einem dieselben an einer Schmalseite verbindenden Steg, von welchem die Klammerschenkel entlang ihrer Längsmittelachsen weg streben bis zu ihrer jeweils gegenüberliegenden Schmalseite, wo sie frei enden, und durch eine an einem Klammerschenkel angeordnete Halterung für ein daran um eine Achse drehbar gelagertes Rad, dessen mittlere Grundebene etwa mit der von den beiden Längsmittelachsen der Seitenschenkel aufgespannten Ebene fluchtet.

Ist die Vorrichtung mit der Klammer an den Enden der zusammengefaßten Ski fixiert, kann das nach unten weisende Rad am Boden entlangrollen und dabei die Ski abstützen. Nun braucht man die Ski nur in deren vorderem Bereich ergreifen und kann sie alsdann bequem hinter sich herziehen. Da die Klammer von hinten auf die Skienden aufgeschoben werden kann, bis deren Verbindungssteg an den Skienden anliegt, und die Ski beim Transport mit ihren rückwärtigen Enden abwärts geneigt sind, werden sie fest gegen diesen Steg gedrückt, so dass die Klammer kaum verrutschen kann, selbst wenn sie nicht weiter fixiert wird. Dabei braucht nur ein Skiende umgriffen zu werden, weil das andere gegen den Klammerschenkel zwischen den Skienden gepreßt wird und die Klammer dadurch reibschlüssig fixiert. Andererseits liegen die beiden Klammerschenkel mit dem einzigen. Rad in einer gemeinsamen Ebene, so dass der Platzbedarf minimal ist und die Vorrichtung während der Pistenabfahrt leicht in einer Anorak- oder gar Hosentasche verstaut werden kann, da schließlich auch der die beiden Klammerschenkel verbindende Steg in der selben Ebene liegt (er liegt am Ende der beiden Klammerschenkellängsachsen). Die Gesamtanordnung ist relativ flach, kann daher beim Einstecken in eine Anorak- oder Hosentasche flach am Körper des Skifahrers anliegen und verursacht daher auch bei einem Sturz keine gefährlichen Verletzungen. Damit die mittlere Grundebene des Rades etwa mit der von den beiden Längsmittelachsen der Seitenschenkel aufgespannten Ebene fluchten kann, ist es erforderlich, dass in dieser mittigen Ebene keinerlei Radhalterungselement vorgesehen ist, insbesondere kein die Radachse tragender Schenkel; diese Teile befinden sich vielmehr seitlich neben dieser Ebene und damit auch seitlich neben einem dortigen Rad.

Es hat sich als günstig erwiesen, dass die Länge des Mittelsteges zwischen den beiden Klammerschenkeln etwa der Stärke eines oder zweier Skier entspricht. Je nach Anwendungsfall wird die Klammer auf nur einen Ski oder auf beide Skier gesteckt. Während im ersteren Fall zusätzlich Sorge dafür zu tragen ist, dass die beiden Skier fest aneinander gelegt sind, kann die Klammer im letzteren Fall diese Aufgabe mit übernehmen. Da die Stärke eines Skis kaum variiert, bietet es sich besonders an, den Schenkelabstand der Klammer auf diesen Wert einzustellen, da es solchenfalls für die Größe der Klammer völlig belanglos ist, ob die beiden Skienden planparallel aneinanderliegen oder voneinander divergieren. Andererseits dient der Mittelsteg zwischen den Klammerschenkeln beim vertikalen Abstellen der Ski als Aufstandsfläche und sollte deshalb entsprechend widerstandsfähig ausgebildet oder - zumindest an seiner rückwärtigen Seite - mit einem schützenden Belag, bspw. aus Gummi versehen sein.

Die Länge eines Klammerschenkels sollte größer sein als dessen Breite, vorzugsweise mehr als doppelt so groß, insbesondere mehr als drei mal so groß, damit sich die Klammer nicht von selbst lösen kann.

Indem die Radachse etwa auf halber Höhe zwischen den beiden Schmalseiten eines Klammerschenkels entlang läuft, d.h., etwa mittig zwischen diesen, stehen die Klammerschenkel an beiden Seiten etwa gleich weit und daher nur minimal über das Rad über, so dass sich eine besonders kompakte, d.h. platzsparende Gesamtanordnung ergibt.

Dem selben Ziel dient ein weiteres Merkmal der Erfindung, wonach der Abstand der Radachse von dem näher gelegenen Klammerschenkel nur geringfügig größer ist als der Radius des Rades. Vorzugsweise beträgt dieser Abstand weniger als 10 mm, insbesondere weniger als 8 mm, am besten weniger als 6 mm.

Ein optimaler Kompromiss für die Länge eines Klammerschenkels besteht darin, diese etwa dem Durchmesser des Rades entsprechend zu wählen. Damit erhält der Klammerschenkel eine maximale Länge, ohne jedoch über das Rad nennenswert überzustehen.

Sofern die Breite eines Klammerschenkels etwa der Breite des Rades entspricht oder geringfügig größer als dieses ist, so läßt sich das Rad ggf. an beiden Seiten von dem betreffenden Klammerschenkel umgreifen, um dieses beidseitig zu lagern.

Die Erfindung empfiehlt, den Durchmesser des Rades größer zu wählen als dessen Breite, vorzugsweise mehr als doppelt so groß, insbesondere mehr als drei mal so groß. Das Rad sollte einen Mindestdurchmesser von mehr als 20 mm aufweisen, vorzugsweise mehr als 30 mm, insbesondere mehr als 40 mm, bspw. etwa 50 bis 70 mm. Andererseits sollte es möglichst schmal bzw. flach sein, damit es gut in einer Hosentasche verstaut werden kann, also bspw. weniger als 40 mm, vorzugsweise weniger als 30 mm, insbesondere 25 mm oder weniger. Ganz besonders wichtig ist, dass nur ein einziges Rad verwendet wird, weil zwei zueinander parallele Räder die Gesamtbreite ganz erheblich vergrößern würden.

Da das einzige Rad etwa symmetrisch zu der von den Längsachsen der Klammerschenkel aufgespannten Ebene liegt, sollte sich seine Lagerung im Bereich des Seitenrandes der Halterung befinden, nahe einer oder beider Radstirnseiten.

Eine besonders einfache Anordnung ergibt sich, wenn das Rad sich auf einer Achse befindet, die an einer oder beiden Seiten des Rades an der Halterung gelagert oder befestigt ist. Die Achse kann entweder zusammen mit dem Rad rotieren oder an der Halterung feststehend fixiert sein. Im ersteren Fall ergibt sich die Lagerung zwischen der Achse und der Halterung, im letzteren Fall zwischen der Achse und dem Rad. Das Lager selbst kann im einfachsten Fall als Gleitlager ausgebildet sein oder bei einer anspruchsvolleren Konstruktion als Wälzlager, insbesondere Kugellager.

Wenn die Halterung einen L- oder U-förmigen Querschnitt aufweist, so läßt sich die Radachse an einem oder beiden freien Enden bzw. Seiten der Halterung lagern oder fixieren. Besonders bewährt hat sich dabei eine Konstruktion, wobei die Halterung ein oder zwei Achsschenkel aufweist, an bzw. zwischen denen die Radachse gelagert oder fixiert ist.

In Weiterverfolgung dieses Erfindungsgedankens ist weiterhin vorgesehen, dass einer der beiden Klammerschenkel mit der Halterung für das Rad integriert ist. Dabei kann der betreffende Klammerschenkel seinerseits als Verbindungssteg zwischen zwei zueinander parallelen Achsschenkeln dienen.

Die Erfindung erfährt eine weitere Optimierung dadurch, dass die Klammerschenkel, der Klammersteg und ein oder zwei Schenkel der Halterung für das Rad die selbe Stärke aufweisen. Die Stärke ist dabei jeweils als die Erstreckung lotrecht bzw. quer zu der Längsrichtung des betreffenden Teils anzusehen, bei zueinander parallelen Schenkeln überdies jeweils in Richtung des Abstandes zu dem gegenüberliegenden Schenkel, und bei einem Steg überdies in Richtung zu den gegenüberliegenden freien Schenkelenden. Etwa gleiche Stärken führen zu etwa gleich großen Querschnitten, und dies wiederum zu etwa identischen Biegefestigkeiten, so dass die Festigkeiten aller Komponenten der Halterung bzw. Klammer aufeinander abgestimmt sind und kein Teil über- oder unterdimensioniert ist.

Herstellungstechnische Vorteile ergeben sich dadurch, dass die Klammerschenkel, der Klammersteg und ein oder zwei Schenkel der Halterung für das Rad aus einem gemeinsamen Zuschnitt aus einem Flachkörper gebogen sind. Durch Ausstanzen der gewünschten Form aus einem ebenen Flachkörper, bspw. Blech oder Kunststoffplatte, werden die gewünschten Umrisse vorgegeben, während die aufeinander abgestimmte Stabilität aus der konstanten Stärke bzw. Dicke des blech-oder plattenförmigen Materials resultiert. Nach Abschluß eines anschließenden Biegevorgangs ist das Klammer- und Halterungsteil bereits fertiggestellt, falls sich nicht noch eine korrosionshemmende Maßnahme anschließt. Ein geeignetes Material könnte bspw. Aluminium sein, da dieses relativ leicht ist. Damit es im Schnee stets gut sichtbar ist und nicht verlorengehen kann, sollte das Teil allerdings farbig gestaltet sein, bspw. lackiert oder pulverbeschichtet in einer vorzugsweise leuchtenden Farbe, wie bspw. rot

In Weiterverfolgung dieses Erfindungsgedankens kann vorgesehen sein, dass ein Achsschenkel, also ein an einem Klammerschenkel angesetztes Halterungselement, etwa die Gestalt eines Dreiecks aufweist, insbesondere die Gestalt eines etwa gleichseitigen Dreiecks. Da gleichseitige Dreiecke stets Eckwinkel von 60° haben, lassen sich somit sechs solche Zuschnitte zu einem sechseckigen Stern zusammenschieben, so dass bei der Herstellung aus Flachkörpern nur ein minimaler Verschnitt auftritt.

Andererseits ist es auch möglich, ein solches Teil aus Kunststoff zu spritzen, ggf. auch um einen Metallkern herum.

Es liegt im Rahmen der Erfindung, dass das Rad eine Felge aufweist, vorzugsweise aus Kunststoff, Metall oder Holz, sowie eine Lauffläche, letztere vorzugsweise aus Kunststoff oder einem weicheren Material, bspw. Gummi. Bei Verwendung von Kunststoff kann die Felge mit der Lauffläche zu einem einzigen Teil integriert sein.

Der Querschnitt der Lauffläche kann eben oder gewölbt bis rund sein. Eine ebene Lauffläche eignet sich eher für härtere Laufflächen-Materialien wie Kunststoff und sorgt für eine verbesserte Seitenstabilität gegenüber Kippen, während ein eher runder Querschnitt sich besonders gut auch bei weichen Laufflächen-Materialien realisieren läßt.

Zur Fixierung der Halterung an einem oder mehreren Skiern eignet sich besonders ein dieselben umschlingendes Band, das durch eine oder mehrere Öffnungen der Halterung hindurchsteckbar ist. Daraus resultiert eine formschlüssige und damit sehr feste Verbindung eines solchen Bandes mit dem Halterungsteil, so dass diese Teile sich nicht ungewollt voneinander lösen können.

Ein solches, mit der Halterung verbundenes, insbesondere durch eine oder mehrere Öffnungen derselben gefädeltes Band kann im Bereich eines seiner Enden eine Schnalle aufweisen, die geeignet ist, das andere Bandende aufzunehmen. Eine solche Schnalle dient zum Umlenken eines freien Bandendes, damit dieses parallel zu dem Mittelabschnitt des Bandes verläuft und an diesem festlegbar ist.

Besondere Vorteile bietet eine Einrichtung zur Fixierung des zweiten Bandendes an dem Band selbst. Es könnte sich bspw. um Lochungen handeln, in welche ein bspw. mit der Schnalle verbundener Stift einsteckbar ist. Die Erfindung bevorzugt jedoch, dass das zweite Bandende mit einem Klettelement versehen ist, dessen Pendant sich auf der selben Seite des Bandes befindet, an den Bereich des ersten Klettelementes anschließend. Eine solche Ausgestaltung bedingt nur einen minimalen Aufwand, ist mit einem einzigen Handgriff herzustellen und auch wieder zu lösen, dabei sehr fest und schließlich auch stufenlos einstellbar, jeweils entsprechend dem Querschnitt der aneinandergelegten Skier. Das Band dient dazu, beide Skier im Bereich der Klammer zu umgreifen und fest aneinander zu pressen. Dadurch soll ein zwischen die Skienden gesteckter Klammerschenkel fest eingeklemmt werden. Um dies zu erreichen, sollte der freie Klammerschenkel zumindest so lange ausgebildet sein, dass er eine von dem Band erzeugte Schlinge durchgreift.

Weitere Merkmale, Eigenschaften, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erfindungsgemäße Vorrichtung in einer perspektivischen Ansicht;
- Fig. 2: die Vorrichtung aus Fig. 1 in einer Seitenansicht;
- Fig. 3: eine Vorderansicht der Vorrichtung aus Fig. 1 und 2 in Richtung des Pfeils III;
- Fig. 4: die Vorrichtung aus den Fig. 1 bis 3 beim Transport von Skiern; sowie
- Fig. 5: einen Zuschnitt für das tragende Teil der Vorrichtung aus den Fig. 1 bis 4 in der Draufsicht.

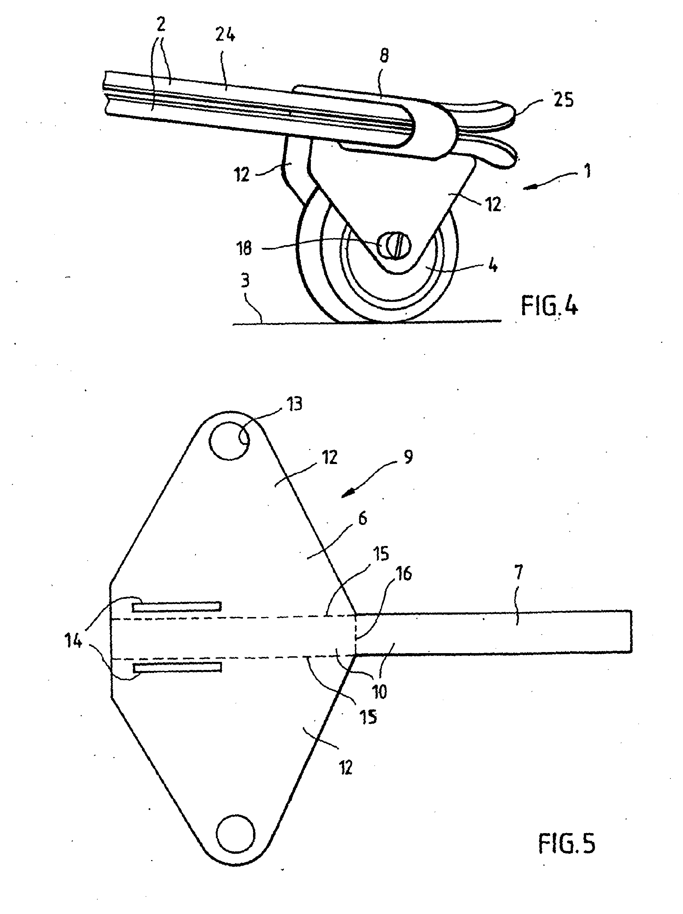

Die Vorrichtung 1 dient zum Fahren von Skiern 2 auf Straßen 3, Wegen und Plätzen, bspw. von einem Autoparkplatz zu der Talstation eines Skilifts, etc., wie der Darstellung in Fig. 4 zu entnehmen ist.

Hierzu dient ein Rad 4, dessen Drehachse 5 an einer Halterung 6 gelagert oder fixiert ist, die mit einer Klammer 7 versehen ist zum Aufstecken auf das rückwärtige Ende der Skier 2. Um dabei gleichzeitig die beiden Skier 2 sicher miteinander zu verbinden, dient ein Band 8, das zu einer Schlaufe verschlungen und mit der Halterung 6 verbunden ist.

Kernstück der Vorrichtung 1 bilden die zu einer Einheit miteinander integrierte Halterung 6 samt Klammer 7. Wie Fig. 5 zeigt, sind diese aus einem flachen Zuschnitt 9 gebogen, der aus einem Flachkörper, bspw. einem Blech, einer Kunststoffplatte od. dgl. ausgestanzt ist; die Zuschnitt-Teile für die Halterung 6 und die Klammer 7 hängen zusammen.

Der Teil des Zuschnittes 9 für die Klammer 7 besteht aus einem langen Streifen 7, 10. Ein kürzeres Teil 10 davon bildet einen Klammerschenkel 11. Zu beiden Seiten dieses Teils 10 ist je ein etwa dreieckförmiges Teil 12 angesetzt, welches im fertig gebogenen Zustand je einen Achsschenkel der Halterung 6 bildet. Jedes Teil 12 verfügt in seinem distalen Bereich über eine vorzugsweise kreisförmige Ausnehmung 13 zum Durchtritt der Drehachse 5, und in seinem proximalen Bereich nahe dem Teil 10 über eine vorzugsweise schlitzförmige Ausnehmung 14 zum Hindurchstecken des Bandes 8.

Dieser Zuschnitt 9 wird entlang von drei Kanten bzw. Bereichen gebogen:

Die beiden dreieckförmigen Achsschenkel-Teile 12 werden entlang ihrer Begrenzungslinie 15 zu dem streifenförmigen Klammerschenkel-Teil 10 um jeweils 90° umgebogen, und zwar zu der selben Richtung hin, so dass sie anschließend nicht nur parallel zueinander verlaufen, sondern sogar deckungsgleich zueinander liegen, und die Ausnehmungen 13 miteinander fluchten. Ihr gegenseitiger Abstand entspricht dann der Breite des Klammerschenkels 10.

Der freie Klammerabschnitt 7 wird am Beginn 16 der seitlichen Dreiecksfortsätze 12 umgebogen, allerdings in entgegengesetzter Richtung wie die Achsschenkel 12 und um insgesamt 180°, so dass er parallel zu dem ersten Klammerschenkel 10 liegt. Dabei erfolgt die Umbiegung entweder allmählich, d.h. mit einem verhältnismäßig großen Biegeradius von bspw. 5 mm, oder - jeweils um 90° - entlang von zwei voneinander beabstandeten Biegekanten 16, deren Abstand etwa der gemeinsamen Stärke zweier aneinandergelegter Skier 2 entspricht.

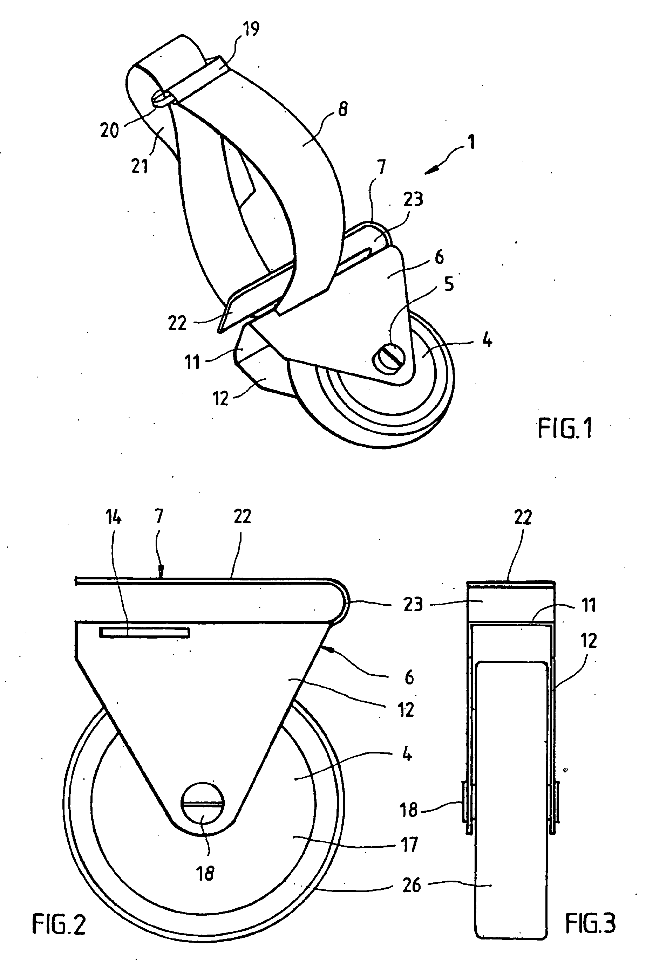

Somit ergibt sich insgesamt die in den Fig. 1 bis 3 dargestellte Anordnung, wobei die Halterungs-Klammer-Einheit 6, 7 aus zwei klammerartigen bzw. U-förmigen Gebilden besteht, wobei ein Schenkel 10 der Klammer 7 gleichzeitig den Rücken 10 der Halterungs-Klammer 6 bildet.

Eine quer durch die Ausnehmungen 13 gesteckte Drehachse 5 trägt das Rad 4, das sich zwischen den beiden Achsschenkel-Teilen 12 befindet. Im Normalfall genügt hierbei ein Gleitlager, d.h., die Nabe 17 weist ebenfalls eine zentrale Durchstecköffnung auf zur Aufnahme der Drehachse 5, die an ihren äußeren Enden bzw. Stirnseiten je eine Innengewindebohrung zum Eindrehen von Schrauben 18 aufweist, deren Kopf außerhalb je eines Achsschenkels 12 liegt, während die Schraubenschäfte die betreffende Ausnehmung 13 durchgreifen. Solchenfalls kann der Durchmesser der Drehachse 5 sogar größer sein als der der Durchsteckausnehmungen 13, so dass die Achssschenkel-Platten 12 zwischen den Schraubenköpfen 18 und der Drehachse 5 eingeklemmt werden. Da der Abstand zwischen den beiden Achsschenkel-Platten 12 kaum größer ist als die Breite des Rades 4, benötigt letzteres keine weitere Seitenführung.

Nach dem Aufstecken dieser Anordnung 1 auf die Enden der Skier 2 können dieselben grundsätzlich auf dem Boden 3 entlang gefahren werden. Damit sich dabei die beiden Skier 2 nicht voneinander lösen können, können diese zusätzlich von dem Band 8 umschlungen werden. Dessen Mittelteil läuft zwischen den beiden schlitzförmigen Ausnehmungen 14 knapp unterhalb des radseitigen Klammerschenkels 11 entlang, vorzugsweise in einer dazu parallelen Ebene, aber quer zu diesem. Ein Ende 19 des Bandes 8 trägt eine Schnalle 20, Ring od. dgl. Es kann bspw. um die Schnalle 20 geschlungen und sodann mit einem angrenzenden Bandabschnitt vernäht sein, so dass die Schnalle 20, Ring. od. dgl. unverlierbar umgriffen wird. Das andere bzw. gegenüberliegende Ende 21 des Bandes 8 ist durch diese Schnalle 20 hindurchgefädelt. Dieser Endbereich 21 ist zumindest an einer Seite mit einem Klettelement versehen, dessen Pendant sich in einem proximaleren Abschnitt des Bandes 8 befindet, jenseits der Schnalle 20.

Nach dem Aufstecken der Klammer 7 auf die Skienden 2 wird das freie Bandende 21 um die Skier 2 geschlungen und anschließend durch die Schnalle 20 gefädelt, umgebogen, strammgezogen und mit dem Klettverschluß am Band 8 fixiert. Nun werden die Skier 2 zusammen gehalten, und außerdem drückt das Band 8 zusätzlich auf den oberen Klammerschenkel 22, so dass die Anpreßkraft der Klammer 7 selbst nicht besonders hoch sein muß und der Mittelsteg 23 der Klammer 7 nicht in hohem Maße federnd ausgebildet sein muß. Vorteilhaft ist dafür, dass das Band beide Klammerschenkel 11, 22 jeweils an deren einander abgewandten Außenseiten umgreift. Das Band 8 verläuft zwischen dem Rad 4 und dem diesem benachbarten Klammerschenkel 11. Die Schlitze 14 für das Band 8 können von dem Mittelsteg 23 der Klammer 7 weg zu den freien Enden der Klammerschenkel 11, 22 hin verlagert sein, damit das Band 8 nicht von den Skiern 2 abrutschen kann. Es genügt ein einziges Band 8, welches die Skier 2 einmal umschlingt, da letztere an ihrem rückwärtigen Ende zusätzlich von dem Mittelsteg 23 der Klammer 7 umgriffen werden; somit werden die Skier 2 insgesamt drei mal bzw. an drei Stellen umgriffen - ein Mal durch die Klammer 7 selbst und zwei Mal durch einander gegenüber liegende Bandabschnitte 8, und zwar an drei verschiedenen Skikanten - ein Mal an jeder Skilängskante 24 und ein Mal an der Skihinterkante 25.

Während die Nabe 17 des Rades 4 aus Kunststoff, Holz, Metall od. dgl. bestehen kann, sollte die Lauffläche 26 aus einem nicht allzu harten Material bestehen, bspw. aus Kunststoff, Gummi od. dgl.

## Patentansprüche

1. Ski-Transport-Vorrichtung (1) zum Transport von Skiern (2) auf Straßen (3), Wegen oder Plätzen, mit einer Klammer (7) zum Aufstecken auf das Ende eines oder zweier Skier (2), bestehend aus zwei länglichen Klammerschenkeln (11, 22) und einem dieselben an einer Schmalseite verbindenden Steg (23), von welchem die Klammerschenkel (11, 22) entlang ihrer Längsmittelachsen weg streben bis zu ihrer jeweils gegenüberliegenden Schmalseite, wo sie frei enden, und mit einem Rad (4), dessen mittlere Grundebene etwa mit der von den beiden Längsmittelachsen der Klammerschenkel (11, 22) aufgespannten Ebene fluchtet, **gekennzeichnet durch** eine an einem Klammerschenkel (11) angeordneten Halterung (6) für das daran um eine Achse (5) drehbar gelagerte Rad (4), wobei einer der beiden Klammerschenkel (10) mit der Halterung (6) für das Rad (4) derart integriert ist, dass er gleichzeitig den Rücken der ihrerseits klammerförmigen Radhalterung (6) bildet.

2. Ski-Transport-Vorrichtung (1) nach Anspruch 1, **dadurch gekennzeichnet, dass** die Länge des Mittelsteges (23) zwischen den beiden Klammerschenkeln (11, 22) etwa der Stärke eines oder zweier Skier (2) entspricht.

3. Ski-Transport-Vorrichtung (1) nach Anspruch 1 oder 2, **dadurch gekennzeichnet, dass** die Länge eines Klammerschenkels (11, 22) größer ist als dessen Breite, vorzugsweise mehr als doppelt so groß, insbesondere mehr als drei mal so groß.

4. Ski-Transport-Vorrichtung (1) nach einem der Ansprüche 1 bis 3, **dadurch gekennzeichnet, dass** die Radachse (5) etwa auf halber Höhe, d.h., etwa mittig, zwischen den beiden Schmalseiten eines Klammerschenkels (11, 22) entlang läuft.

5. Ski-Transport-Vorrichtung (1) nach einem der vorhergehenden Ansprüche, **dadurch gekennzeichnet, dass** der Abstand der Radachse (5) von dem näher gelegenen Klammerschenkel (11) nur geringfügig größer ist als der Radius des Rades (4), bspw. größer um weniger als 10 mm, vorzugsweise um weniger als 8 mm, insbesondere um weniger als 6 mm.

6. Ski-Transport-Vorrichtung (1) nach einem der vorhergehenden Ansprüche, **dadurch gekennzeichnet, dass** die Länge eines Klammerschenkels (11, 22) etwa dem Durchmesser des Rades (4) entspricht.

7. Ski-Transport-Vorrichtung (1) nach einem der vorhergehenden Ansprüche, **dadurch gekennzeichnet, dass** die Breite eines Klammerschenkels (11, 22) etwa der Breite des Rades (4) entspricht oder geringfügig größer als dieses ist.

8. Ski-Transport-Vorrichtung (1) nach einem der vorhergehenden Ansprüche, **dadurch gekennzeichnet, dass** der Durchmesser des Rades (4) größer ist als dessen Breite, vorzugsweise mehr als doppelt so groß, insbesondere mehr als drei mal so groß.

9. Ski-Transport-Vorrichtung (1) nach einem der vorhergehenden Ansprüche, **dadurch gekennzeichnet, dass** das Rad (4) sich auf einer Achse (5) befindet, die an einer oder beiden Seiten des Rades (4) an der Halterung (6) gelagert oder befestigt ist.

10. Ski-Transport-Vorrichtung (1) nach einem der vorhergehenden Ansprüche, **dadurch gekennzeichnet, dass** die Halterung (6) ein oder zwei Schenkel (12) aufweist, an bzw. zwischen denen die Radachse (5) gelagert oder fixiert ist.

11. Ski-Transport-Vorrichtung (1) nach einem der vorhergehenden Ansprüche, **dadurch gekennzeichnet, dass** die Klammerschenkel (11, 22), der Klammersteg (23) und ein oder zwei Schenkel (12) der Halterung (6) für das Rad (4) die selbe Stärke aufweisen.

12. Ski-Transport-Vorrichtung (1) nach einem der vorhergehenden Ansprüche, **dadurch gekennzeichnet, dass** die Klammerschenkel (11, 22), der Klammersteg (23) und ein oder zwei Schenkel (12) der Halterung (6) für das Rad (4) aus einem gemeinsamen Zuschnitt eines Flachkörpers gebogen sind.

13. Ski-Transport-Vorrichtung (1) nach einem der Ansprüche 1 bis 12, **dadurch gekennzeichnet, dass** die Klammerschenkel (11, 22), der Klammersteg (23) und ein oder zwei Schenkel (12) der Halterung (6) für das Rad (4) einteilig im Spritzguß hergestellt sind, bspw. aus einem Kunststoff.

14. Ski-Transport-Vorrichtung (1) nach einem der vorhergehenden Ansprüche, **dadurch gekennzeichnet, dass** die Halterung (6) eine oder mehrere Öffnungen (14) aufweist zum Hindurchstecken eines Bandes (8) zwecks Fixierung der Halterung (6) an einem oder mehreren Skiern (2), insbesondere durch Umschlingung derselben.

15. Ski-Transport-Vorrichtung (1) nach Anspruch 15, **dadurch gekennzeichnet, dass** ein Ende (21) des Bandes (8) mit einem Klettelement versehen ist, dessen Pendant sich ebenfalls an dem Band (8) befindet, vorzugsweise auf der selben Seite des Bandes (8), insbesondere an den Bereich des ersten Klettelementes anschließend.

## Claims

1. Ski transport device (1) for the transportation of skis (2) on roads (3), paths or squares with a clip (7) to slip over the end of one or two skis (2), consisting of two longitudinal clip arms (11, 22) and a crosspiece (23) connecting same on a narrow side, from which the clip arms (11, 22) extend along away from their longitudinal middle axles up to their respective opposite narrow side, where they end free, and together with a wheel (4) whose middle base plane approximately aligns with the plane extending from the two longitudinal middle axles of the clip arms (11, 22), **characterized by** a holder (6) located on a clip arm (11) for the wheel (4) which can turn thereon around an axle (5), wherein one of the two clip arms (10) is integrated in such a way with the holder (6) for the wheel (4) that it simultaneously forms the back of the also clip-shaped wheel holder (6) .

2. Ski transport device (1) as defined in claim 1, **characterized in that** the length of the middle crosspiece (23) between the two clip arms (11, 22) corresponds approximately to the thickness of one or two skis (2).

3. Ski transport device (1) as defined in claim 1 or 2, **characterized in that** the length of one clip arm (11, 22) is greater than its width, preferably more than twice as great, in particular more than three times as great.

4. Ski transport device (1) as defined in one of the claims 1 to 3, **characterized in that** the wheel axis (5) runs along at half the height, i.e., about in the middle, between the two narrow sides of a clip arm (11, 22).

5. Ski transport device (1) as defined in one of the preceding claims, **characterized in that** the distance of the wheel axle (5) to the adjacent clip arm (11) is only slightly greater than the radius of the wheel (4), for example, greater by less than 10 mm, preferably greater by less than 8 mm, in particular greater by less than 6 mm.

6. Ski transport device (1) as defined in one of the preceding claims, **characterized in that** the length of one clip arm (11, 22) approximately corresponds to the diameter of the wheel (4).

7. Ski transport device (1) as defined in one of the preceding claims, **characterized in that** the width of one clip arm (11, 22) approximately corresponds to the width of the wheel (4) or is slightly greater than this.

8. Ski transport device (1) as defined in one of the preceding claims, **characterized in that** the diameter of the wheel (4) is greater than its width, preferably more than twice as great, in particular more than three times as great.

9. Ski transport device (1) as defined in one of the preceding claims, **characterized in that** the wheel (4) is located on an axle (5) which is supported or secured on one or both sides of the wheel (4) to a holder (6).

10. Ski transport device (1) as defined in one of the preceding claims, **characterized in that** the holder (6) has one or two arms (12) on or between which the wheel axle (5) is supported or secured.

11. Ski transport device (1) as defined in one of the preceding claims, **characterized in that** the clip arms (11, 22), the clip crosspiece (23) and one or two arms (12) of the holder (6) for the wheel (4) have the same thickness.

12. Ski transport device (1) as defined in one of the preceding claims, **characterized in that** the clip arms (11, 12), the clip crosspiece (23) and one or two arms (12) of the holder (6) for the wheel (4) are bent from a common cutout of a flat body.

13. Ski transport device (1) as defined in one of the claims 1 to 12, **characterized in that** the clip arms (11, 22), the clip crosspiece (23) and one or two arms (12) of the holder (6) for the wheel (4) are made by die casting, for example, from a plastic.

14. Ski transport device (1) as defined in one of the preceding claims, **characterized in that** the holder (6) has one or a plurality of openings (14) through which to thread a band (8) to secure the holder (6) to one or a plurality of skis (2), in particular by entwining same.

15. Ski transport device (1) as defined in claim 15, **characterized in that** one end (21) of the band (8) is provided with a hook-and-loop element whose counterpart is also located on the band (8), preferably on the same side of the band (8), in particular in the area of the first hook-and-loop element afterwards.

## Revendications

1. Dispositif de transport de ski (1) pour le transport de skis (2) sur les routes (3) chemins ou places, avec une attache (7) à fixer sur l'extrémité d'un ou de deux skis (2), comprenant deux branches (11, 22) de forme allongée et une partie médiane les reliant (23) sur un petit côté, à partir de laquelle les branches de l'attache (11, 22) sur la longueur de leurs axes médians longitudinaux s'écartent jusqu'à leur petit côté respectivement opposé, où elles se terminent librement, et avec une roue (4) dont le plan de base moyen s'aligne approximativement au plan défini par les deux axes médians longitudinaux des branches de l'attache (11, 22), **caractérisé en ce qu'**un élément de fixation (6) disposé sur une branche de l'attache (11) pour la roue (4) montée à rotation autour d'un axe (5), où l'une des deux branches de l'attache (10) est intégrée à l'élément de fixation (6) de la roue (4) de façon telle qu'elle constitue simultanément le dos de l'élément de fixation de la roue (6) lequel est lui aussi en forme d'attache.

2. Dispositif de transport de ski (1) selon la revendication 1, **caractérisé en ce que** la longueur de la partie médiane (23) entre les deux branches de l'attache (11, 22) correspond approximativement à l'épaisseur d'un ou de deux skis (2).

3. Dispositif de transport de ski (1) selon la revendication 1 ou 2, **caractérisé en ce que** la longueur d'une branche de l'attache (11, 22) est supérieure à sa largeur, de préférence plus du double, en particulier plus du triple.

4. Dispositif de transport de ski (1) selon l'une des revendications 1 à 3, **caractérisé en ce que** l'axe de la roue (5) tourne approximativement à moitié de la hauteur, c.-à-d. approximativement au milieu, entre les deux petits côtés d'une branche de l'attache (11, 22).

5. Dispositif de transport de ski (1) selon l'une des revendications précédentes, **caractérisé en ce que** la distance de l'axe de la roue (5) par rapport à la branche de l'attache (11) la plus proche est juste légèrement supérieure au rayon de la roue (4), par exemple supérieure de moins de 10 mm, de préférence de moins de 8 mm, en particulier de moins de 6 mm.

6. Dispositif de transport de ski (1) selon l'une des revendications précédentes, **caractérisé en ce que** la longueur d'une branche de l'attache (11, 22) correspond approximativement au diamètre de la roue (4).

7. Dispositif de transport de ski (1) selon l'une des revendications précédentes, **caractérisé en ce que** la largeur d'une branche de l'attache (11, 22) correspond approximativement à la largeur de la roue (4) ou est légèrement supérieure à celle-ci.

8. Dispositif de transport de ski (1) selon l'une des revendications précédentes, **caractérisé en ce que** le diamètre de la roue (4) est supérieur à sa largeur, de préférence plus du double, en particulier plus du triple.

9. Dispositif de transport de ski (1) selon l'une des revendications précédentes, **caractérisé en ce que** la roue (4) se trouve sur un axe (5) qui est monté ou fixé sur l'élément de fixation (6) sur l'un ou sur les deux côtés de la roue (4).

10. Dispositif de transport de ski (1) selon l'une des revendications précédentes, **caractérisé en ce que** l'élément de fixation (6) présente une ou deux branches (12) sur ou entre lesquelles l'axe de la roue (5) est monté ou fixé.

11. Dispositif de transport de ski (1) selon l'une des revendications précédentes, **caractérisé en ce que** les branches de l'attache (11, 22), la partie médiane de l'attache (23) et une ou deux branches (12) de l'élément de fixation (6) pour la roue (4) présentent la même épaisseur.

12. Dispositif de transport de ski (1) selon l'une des revendications précédentes, **caractérisé en ce que** les branches de l'attache (11, 22), la partie médiane de l'attache (23) et une ou deux branches (12) de l'élément de fixation (6) pour la roue (4) sont cintrées à partir d'une découpe commune d'un corps plat.

13. Dispositif de transport de ski (1) selon l'une des revendications 1 à 12, **caractérisé en ce que** les branches de l'attache (11, 22), la partie médiane de l'attache (23) et une ou deux branches (12) de l'élément de fixation (6) pour la roue (4) sont réalisées en une seule pièce moulée par injection, par exemple en matière plastique.

14. Dispositif de transport de ski (1) selon l'une des revendications précédentes, **caractérisé en ce que** l'élément de fixation (6) présente une ou plusieurs ouvertures (14) pour le passage d'une courroie (8) destinée à la fixation de l'élément de fixation (6) sur un ou plusieurs skis (2), en particulier par enroulement.

15. Dispositif de transport de ski (1) selon la revendication 15, **caractérisé en ce qu'**une extrémité (21) de la courroie (8) est munie d'un élément auto-agrippant dont le pendant est lui aussi sur la courroie (8), de préférence sur le même côté de la courroie (8), en particulier consécutif à la zone du premier élément auto-agrippant.
